# EUROPÄISCHE PATENTSCHRIFT

(11) **EP 3 669 550 B1**
(45) Veröffentlichungstag und Bekanntmachung des Hinweises auf die Patenterteilung: **20.04.2022**
(21) Anmeldenummer: 18753390.6
(22) Anmeldetag: 09.08.2018
(51) Int. Cl.: H04Q 9/04, H04L 12/403, G01S 15/93, H04L 12/40

(54) **VERFAHREN ZUM BETREIBEN EINER SENSORANORDNUNG IN EINEM KRAFTFAHRZEUG AUF BASIS EINES DSI-PROTOKOLLS**
METHOD FOR OPERATING A SENSOR ASSEMBLY IN A MOTOR VEHICLE ON THE BASIS OF A DSI PROTOCOL
PROCÉDÉ POUR FAIRE FONCTIONNER UN ENSEMBLE DE DÉTECTION DANS UN VÉHICULE À MOTEUR SUR LA BASE D'UN PROTOCOLE DSI

(30) Priorität: 15.08.2017 DE 102017118565
(43) Veröffentlichungstag der Anmeldung: 24.06.2020
(73) Patentinhaber: Valeo Schalter und Sensoren GmbH, 74321 Bietigheim-Bissingen (DE)
(72) Erfinder: LEWANDOWSKI, Marek, 74321 Bietigheim-Bissingen (DE)
(74) Vertreter: Enge, Sebastian
(86) Internationale Anmeldenummer: PCT/EP2018/071611
(87) Internationale Veröffentlichungsnummer: WO 2019/034520

(56) Entgegenhaltungen:
- EP-A1- 2 263 102
- EP-A1- 2 811 695
- EP-B1- 2 263 102
- DE-A1-102014 107 689
- DE-A1-102016 223 835
- Anonymous: "DSI3 Bus Standard", , 16. Februar 2011 (2011-02-16), Seiten 1-45, XP055510946, Gefunden im Internet: URL:https://www.dsiconsortium.org/download s/DSI3_%20Bus_Standard_r1.00.pdf [gefunden am 2018-09-28]

## Beschreibung

Die Erfindung betrifft ein Verfahren zum Betreiben einer Sensoranordnung in einem Kraftfahrzeug auf Basis eines DSI-Protokolls, wobei die Sensoranordnung eine Zentraleinheit als Master und eine Mehrzahl jeweils einen Empfänger aufweisenden Sensoreinheiten als von dem Master gesteuerte Slaves aufweist, die Zentraleinheit und die Sensoreinheiten an eine Busleitung angeschlossen sind und über die Busleitung eine Kommunikation zwischen der Zentraleinheit und den Sensoreinheiten erfolgt. Die Erfindung betrifft ferner die Verwendung eines solchen Verfahrens in einem Kraftfahrzeug sowie ein solches Kraftfahrzeug selbst.

Das DSI-Protokoll Distributed System Interface, siehe: DSI3 Bus Standard, Revision 1.00 vom 16. Februar 2011, ist ein Protokoll, das es gestattet, auf Basis einer einfachen Zweidraht-Verkabelung ein Sensor-Netzwerk aufzubauen, in dem ein Master mit einem oder mehreren Slaves über eine Busleitung kommuniziert. Das DSI-Protokoll richtet sich dabei primär auf die Verwendung in Kraftfahrzeugen, um mittels des Masters eine Mehrzahl von Slaves, insbesondere Sensoren und Aktoren, abzufragen und/oder anzusteuern.

Die Spezifikation des DSI-Protokolls sieht dabei vor, dass eine solche Sensoranordnung in einer von zwei Betriebsklassen betrieben werden kann, und zwar einerseits in der "Signal Function Class", andererseits in der "Power Function Class". Das Protokoll sieht weiterhin grundsätzlich drei unterschiedliche Typen der Nutzung des Busses zwischen dem Master und den Slaves vor:
Im CRM-Modus (Command and Response Modus) findet eine bidirektionale Kommunikation zwischen dem Master und den Slaves statt. Der Master sendet ein Kommando (Command), auf das die Slaves antworten (Response). Dieses Verfahren wird beispielsweise verwendet, um die Slaves zu konfigurieren oder um bestimmte Werte gezielt von einem Slave abzufragen.

Im PDCM-Modus (Periodic Data Collection Mode) übertragen die Slaves vergleichsweise große Datenmengen innerhalb eines vorgegebenen Zeitschlitzes an den Master, wobei die Sendetätigkeit des Masters sich darauf beschränkt, durch ein Synchronisierungssignal (Broadcast Read Command) den Slaves einen Bezugspunkt zur Bestimmung dieses Zeitschlitzes zur Verfügung zu stellen. Die Slaves sind bereits zuvor mit Informationen zu ihrem jeweiligen Zeitschlitz ausgestattet worden, so dass sie in Reaktion auf das Synchronisierungssignal ihr jeweiliges Sendezeitintervall bestimmen und auf Basis dessen ihre Sensordaten an den Master senden können.

In der Power-Phase findet die Übertragung von vergleichsweise großen Mengen elektrischer Energie statt, um die Slaves mit hohem Energiebedarf mit ausreichend Energie zu versorgen.

Die oben genannte Signal Function Class gemäß der oben genannten Spezifikation dient primär der Anbindung von Slaves mit geringem Energiebedarf und vergleichsweise hohem Datenaufkommen, das von dem Slave zum Master zu senden ist. Nach Inbetriebnahme einer Sensoranordnung der Signal Function Class findet zunächst eine Phase der Kommunikation im CRM-Modus zwischen dem Master und dem Slave statt, im Rahmen derer der Slave üblicherweise konfiguriert wird, beispielsweise in Hinblick auf die Parameter des oben genannten PDCM-Zeitschlitzes dieses Slaves. Ist diese Phase abgeschlossen, so geht die Sensoranordnung in den PCDM-Modus über, in dem immer in Reaktion auf das Synchronisierungssignal des Masters die Slaves die erfassten Daten im jeweils zugeordneten Zeitschlitz an die Zentralinstanz senden. Diese Phase im PDCM-Modus wird üblicherweise nicht mehr verlassen, bis der Betrieb der Sensoranordnung unterbrochen wird. Eine Power-Phase ist gemäß Signal Function Class nicht vorgesehen und aufgrund des geringen Energiebedarfs der Slaves auch nicht erforderlich.

Die oben genannte Power Function Class dient primär der Anbindung von Slaves mit vergleichsweise hohem Energiebedarf und vergleichsweise geringem Datenaufkommen, das von dem Master zum Slave zu senden ist. Im Betrieb einer Sensoranordnung der Power Function Class finden im Wechsel einerseits Phasen der Kommunikation zwischen dem Master und dem Slave im CRM-Modus sowie andererseits Power-Phasen statt. Dabei überwiegen zeitlich üblicherweise die Power-Phasen deutlich.

Durch die Speisung der Slaves in diesen Phasen mit vergleichsweise viel Energie bei, verglichen mit dem CRM-Modus, höherer Spannung können insbesondere Aktoren betrieben werden, wobei dies üblicherweise auf Basis von zuvor in der CRM-Phase von dem Master an die Slaves übertragenen Steuerbefehlen erfolgt. Der PDCM-Modus findet gemäß Power Function Class keine Anwendung, da er bei den genannten Aktoren aufgrund geringen Datenaufkommens auch nicht erforderlich ist.

Im PDCM-Modus folgt die Datenübertragung einem festen, vom Master vorgegebenen Schema. Dabei wird in der Regel jedem Slave ein fester Zeitschlitz zugewiesen, also eine relativ zu einem vom Master ausgesandten Synchronisationssignal vorgegebene Zeitdauer, in der vom jeweiligen Slave Daten an den Master zu übertragen sind. Mitunter kommt es jedoch zu Situationen, in denen ein Slave überhaupt keine Daten empfängt oder aus anderen Gründen keine Daten zu übertragen hat. Ein derartiger einem Slave zugeordneter Zeitschlitz bleibt bei der Datenübertragung von den Slaves an den Master damit leer. Im Übrigen gibt es auch Situationen, in denen ein einem Slave zugeordneter Zeitschlitz nicht ausreicht, um alle Daten von diesem Slave an den Master zu übertragen. In derartigen Situationen muss einem ersten Zyklus mit Zeitschlitzen für die verschiedenen Slaves wenigstens ein zweiter Zyklus nachgeschaltet werden, um schließlich alle Daten von den Slaves an den Master zu übertragen. Die beiden zuvor geschilderten Situationen sind insofern problematisch, als dass die Bandbreite zur Übertragung von Daten von den Slaves an den Master sinkt. Dies kann zu Situationen führen, in denen dem Master nicht schnell genug alle Informationen vorliegen, um z.B. bei einem Fahrerassistenzsystem in einem Fahrzeug auf eine sich verändernde Umgebungsbedingung adäquat reagieren zu können.

In der WO 2016/054345 A1 ist ein Ultraschallsystem zum Überwachen des Zustands oder der Integrität einer Struktur, wie z. B. in der Öl-, Gas- oder Energieerzeugungswirtschaft genutzt, beschrieben. Das System umfasst eine Mehrzahl von Ultraschallsensoren und wenigsten ein Digital Sensor Interface.

Die DE 10 2013 226 376 A1 beschreibt ein Verfahren zum Betreiben eines Sensorsystem mit einem Ultraschallsensor und einem Steuergerät, wobei Daten von dem Ultraschallsensor an das Steuergerät strommoduliert und Daten von dem Steuergerät zum Ultraschallsensor spannungsmoduliert übertragen werden. Durch diese Lösung können nach Modifikation einer entsprechenden PSI5-Datenbus-Schnittstelle eben dieser Datenbus und ein LIN-Datenbus zur Datenübertragung zur Ausnutzung der Vorteile der beiden Bussystem miteinander kombiniert werden.

In der DE 10 2012 103 907 A1 ist ein Verfahren zum Betrieb einer Empfangseinheit eines mit einer Sendeeinheit verbundenen Kraftfahrzeugsteuergeräts beschrieben. Die Empfangseinheit fügt dem empfangenen Signal eine Kennung hinzu, welche eine virtuelle Adresse der Sendeeinheit enthält. Dies kann verwendet werden, um eine Sensoreinheit nach dem PSI5-Version1-Standard an ein Kraftfahrzeugsteuergerät anzuschließen, das Signale im PSI-Version2-Standard verarbeitet.

Die EP 2 263 102 B1 beschreibt schließlich ein ultraschallbasiertes Fahrerassistenzsystem mit mehreren Sensoren. Die Sensoren sind jeweils mit einem individuellen Identifikationscode belegt, der über eine Schnittstelle von einem Steuergerät auslesbar ist. Die Schnittstelle ist eine 2-Draht-Bussschnittstelle, die nach einer Periphere Sensor Schnittstelle (Peripheral Sensor Interface PSI) ausgebildet ist.

Die DE 10 2014 197 689 A1 offenbart eine Kraftfahrzeugsteuerung (ACU), die in der Lage ist, mit Sensoren unter Benutzung einer Vielzahl unterschiedlicher Kommunikationsprotokolle zu kommunizieren. Die ACU umfasst eine Steuerung, die ein Sensorschnittstellenmodul antreibt, selektiv eine Vielzahl von Steuersignalen zu erzeugen, die einer Vielzahl unterschiedlicher Kommunikationsprotokolle entsprechen, wobei die betreffenden Steuersignale Charakteristika haben, die einem der Vielzahl unterschiedlicher Kommunikationsprotokolle entsprechen. Eine Modulationseinheit empfängt eines der Steuersignale und erzeugt ein moduliertes Kommunikationssignal, das Charakteristika hat, die einem Kommunikationsprotokoll des einen der Steuersignale entsprechen. Ein Kommunikationsbus stellt das Kommunikationssignal einem Sensornetzwerk bereit, das einen Sensor oder mehrere Sensoren umfasst. Indem die Modulationseinheit so betrieben wird, dass sie entsprechend unterschiedlichen Kommunikationsprotokollen funktioniert, kann die ACU so angetrieben werden, dass sie mit mehreren Sensoren kommuniziert, die unterschiedliche Kommunikationsprotokolle (z. B. PSI5- und DSI3-Kommunikationsprotokolle) benutzen.

Es ist die Aufgabe der Erfindung, ein derartiges Verfahren zum Betreiben einer Sensoranordnung in einem Kraftfahrzeug auf Basis eines DSI-Protokolls anzugeben, bei dem eine Kommunikation zwischen Master und Slaves regelmäßig mit einer hohen Bandbreite möglich ist.

Diese Aufgabe wird durch die Gegenstände der unabhängigen Patentansprüche gelöst.

Bevorzugte Weiterbildungen der Erfindungen sind in den Unteransprüchen beschrieben. Erfindungsgemäß ist somit ein Verfahren zum Betreiben einer Sensoranordnung in einem Kraftfahrzeug auf Basis eines DSI-Protokolls vorgesehen, wobei
- die Sensoranordnung eine Zentraleinheit als Master und eine Mehrzahl jeweils einen Empfänger aufweisende Sensoreinheiten als von dem Master gesteuerte Slaves aufweist,
- die Zentraleinheit und die Sensoreinheiten an eine Busleitung angeschlossen sind und
- über die Busleitung eine Kommunikation zwischen der Zentraleinheit und den Sensoreinheiten mit folgenden Schritten erfolgt:
- Auswählen einer ersten Gruppe von Sensoreinheiten durch die Zentraleinheit für eine erste Messung, Zuordnen eines Zeitschlitzes oder mehrerer Zeitschlitze innerhalb eines ersten Zyklus an jeweils eine der Sensoreinheiten aus der ersten Gruppe durch die Zentraleinheit und Aussenden einer entsprechenden Zeitschlitzinformation von der Zentraleinheit an die Sensoreinheiten,
- Aussenden eines Synchronisierungssignals von der Zentraleinheit an die Sensoreinheiten,
- auf das Synchronisierungssignal hin Aussenden von von einer jeweiligen Sensoreinheit der ersten Gruppe jeweils erfassten Daten an die Zentraleinheit in dem der jeweiligen Sensoreinheit zugeordneten Zeitschlitz des ersten Zyklus bzw. in den der jeweiligen Sensoreinheit zugeordneten Zeitschlitzen des ersten Zyklus,
- Auswählen einer zweiten von der ersten Gruppe verschiedenen Gruppe von Sensoreinheiten durch die Zentraleinheit für eine zweite Messung, Zuordnen eines Zeitschlitzes oder mehrerer Zeitschlitze innerhalb eines zweiten Zyklus an jeweils eine der Sensoreinheiten aus der zweiten Gruppe durch die Zentraleinheit und Aussenden einer entsprechenden Zeitschlitzinformation an die Sensoreinheiten,
- Aussenden eines Synchronisierungssignals von der Zentraleinheit an die Sensoreinheiten,
- auf das Synchronisierungssignal hin Aussenden von von einer jeweiligen Sensoreinheit der zweiten Gruppe jeweils erfassten Daten an die Zentraleinheit in dem der jeweiligen Sensoreinheit zugeordneten Zeitschlitz des zweiten Zyklus bzw. in den der jeweiligen Sensoreinheit zugeordneten Zeitschlitzen des zweiten Zyklus.

Wie oben schon angegeben, bedeutet "Zeitschlitz" dabei eine Zeitdauer in einem vorbestimmten zeitlichen Abstand zu einem von dem Master ausgegebenen Synchronisierungssignal. Im Übrigen sind die Begriffe "erste Gruppe von Sensoreinheiten" und "zweite Gruppe von Sensoreinheiten" so zu verstehen, dass diese Gruppen einerseits eine Mehrzahl von Sensoreinheiten, andererseits aber auch nur eine einzige Sensoreinheit umfassen können. Wenn es im Übrigen heißt, dass ein Verfahren zum Betreiben einer Sensoranordnung in einem Kraftfahrzeug auf Basis eines DSI-Protokolls vorgesehen ist, so bedeutet dies, dass alle hier beschriebenen Verfahrensschritte der Erfindung oder einer bevorzugten Ausgestaltung der Erfindung derartige Verfahrensschritte sind, die unter dem DSI-Protokoll durchgeführt werden. Das schließt natürlich nicht aus, dass das Verfahren zusätzlich auch andere, hier nicht beschriebene Verfahrensschritte aufweisen kann, die nicht unter dem DSI-Protokoll durchgeführt werden.

Es ist somit ein wesentlicher Aspekt der Erfindung, dass vom Master diejenigen Slaves ausgewählt werden, denen überhaupt Zeitschlitze zum Senden von Daten zugeordnet werden, die Zeitschlitze also nicht statisch vergeben sind sondern dynamisch vergeben werden. Konkret ist es dabei so, dass für eine bestimmte Messung nicht alle Slaves einen Zeitschlitz zum Senden von Daten zugeordnet bekommen. Während z.B. bei der ersten Messung noch allen Slaves ein derartiger Zeitschlitz zum Senden von Daten zugeordnet worden ist, wird bei der zweiten Messung wenigstens einer der Slaves ausgeschlossen; diesem Slave wird also kein Zeitfenster zum Senden von Daten zugeordnet. Die erste Gruppe von Sensoreinheiten ist also von der zweiten Gruppe von Sensoreinheiten verschieden: Die Sensoreinheiten, die zur ersten Gruppe gehören, entsprechen nicht den Sensoreinheiten, die zur zweiten Gruppe gehören. Zwar können die Gruppen teilweise dieselben Sensoreinheiten umfassen. Es ist jedoch zwingend, dass wenigstens hinsichtlich einer Sensoreinheit ein Unterschied zwischen den beiden Gruppen besteht, diese Sensoreinheit also nur zu einer der beiden Gruppen gehört.

Im Übrigen liegt es auch im Rahmen der vorliegenden Erfindung, beim Zuordnen der Zeitschlitze an die Slaves jedem Slave nicht nur einen Zeitschlitz oder allen Slaves dieselbe Anzahl von Zeitschlitzen zuzuordnen. Vielmehr ermöglicht es die Erfindung, allen Slaves, denen ein Zeitschlitz zugeordnet wird, eine individuelle Anzahl von Zeitschlitzen zuzuordnen.

Erfindungsgemäß gibt es wenigstens zwei voneinander verschiedene Gruppen von Sensoreinheiten. Im Rahmen der Erfindung liegt es aber natürlich auch, dass mehr als zwei voneinander verschiedene Gruppen von Sensoreinheiten verwendet werden. Wie die Sensoreinheiten, denen ein Zeitschlitz zugeordnet wird bzw. denen Zeitschlitze zugeordnet werden, jeweils vorzugsweise ausgewählt werden, wird weiter unten beschrieben.

Gemäß einer bevorzugten Weiterbildung der Erfindung weist das Verfahren zusätzlich die folgenden Schritte auf:
- Auswählen nur derartiger Sensoreinheiten für die erste Gruppe, von denen die Zentraleinheit für die erste Messung Daten erwartet, und/oder
- Auswählen nur derartiger Sensoreinheiten für die zweite Gruppe, von denen die Zentraleinheit für die zweite Messung Daten erwartet.

Diese bevorzugte Ausgestaltung der Erfindung macht das Verfahren besonders effektiv, da nur derartige Sensoreinheiten für das Zuordnen von Zeitschlitzen ausgewählt werden, für die die Zentraleinheit für die jeweilige Messung tatsächlich Daten erwartet. Die Auswahl ist also nicht im Vorfeld des Verfahrens erfolgt, sondern erfolgt in Echtzeit in Abhängigkeit von der jeweils aktuellen Situation. Auf diese Weise wird die Bandbreite bei der Datenübertragung von den Sensoreinheiten zu der Zentraleinheit nicht durch derartige Zeitschlitze verringert, die leer bleiben, da die Sensoreinheiten, die in diesen Zeitschlitzen ihre Daten hätten übertragen sollen, überhaupt keine Signale empfangen und deshalb auch keine Daten zu übertragen haben.

Gemäß einer bevorzugten Weiterbildung der Erfindung weist das Verfahren zusätzlich die folgenden Schritte auf:
- wenigstens einmaliges Wiederholen des ersten Zyklus und/oder
- wenigstens einmaliges Wiederholen des zweiten Zyklus.

Auf diese Weise kann berücksichtigt werden, dass die von den Sensoreinheiten zu übertragenden Daten nicht vollständig in einem einzigen Zyklus übertragen werden können. Anstatt diesen Zyklus also mit sehr vielen Zeitschlitzen zu versehen, wird der jeweilige Zyklus einmal oder mehrmals wiederholt. Diese bevorzugte Ausgestaltung der Erfindung trägt im Übrigen auch der Situation Rechnung, dass ein Zyklus zeitlich beschränkt sein kann, so dass nicht beliebig viele Zeitschlitze in einen solchen Zyklus gepackt werden können.

Gemäß einer bevorzugten Weiterbildung der Erfindung weist das Verfahren zusätzlich die folgenden Schritte auf:
- Zuordnen einer derartigen Anzahl von Zeitschlitzen an eine jeweilige Sensoreinheit aus der ersten Gruppe, welche Anzahl von Zeitschlitzen mit der von Zentraleinheit für die erste Messung von der jeweiligen Sensoreinheit erwarteten Datenmenge korreliert, und/oder
- Zuordnen einer derartigen Anzahl von Zeitschlitzen an eine jeweilige Sensoreinheit aus der zweiten Gruppe, welche Anzahl von Zeitschlitzen mit der von Zentraleinheit für die zweiten Messung von der jeweiligen Sensoreinheit erwarteten Datenmenge korreliert.

Auf diese Weise wird Sensoreinheiten, von denen besonders viele Daten erwartet werden, auch eine größere Anzahl an Zeitschlitzen zugeordnet. Dabei ist es natürlich nicht möglich, dass die Anzahl der Zeitschlitze direkt proportional zur Datenmenge ist, da die Zeitschlitze nur diskret vergeben werden können, gegebenenfalls also ein zweiter Zeitschlitz vergeben werden muss, obwohl dieser aufgrund der verbleibenden Daten nicht vollständig gefüllt wird.

Vorzugsweise weist ferner wenigstens eine Sensoreinheit jeweils einen Sender zum Aussenden eines Signals auf, und das Verfahren weist zusätzlich folgende Schritten auf:
- Aussenden eines Signals in der ersten Messung von einer einen Sender aufweisenden Sensoreinheit, und/oder
- Aussenden eines Signals in der zweiten Messung von wenigstens einer einen Sender aufweisenden Sensoreinheit.

Gemäß dieser bevorzugten Ausgestaltung der Erfindung ist eine Sensoreinheit also nicht nur mit einem Empfänger, sondern auch mit einem Sender ausgestattet, so dass mit dem Empfänger von dem Sender ausgesandte Signale empfangen werden können. Im Übrigen können von einer Sensoreinheit natürlich nicht nur derartige Signale empfangen werden, die von einem in dieser Sensoreinheit vorgesehenen Sender stammen. Vielmehr können auch derartige Signale empfangen werden, die von Sendern anderer Sensoreinheiten stammen. Ganz besonders bevorzugt ist in diesem Zusammenhang im Übrigen vorgesehen, dass alle Sensoreinheiten der Sensoranordnung mit jeweils einem Sender versehen sind.

Insofern sind gemäß einer bevorzugten Ausgestaltung der Erfindung auch folgende Schritte vorgesehen:
- Aussenden des Signals in der ersten Messung von wenigstens einer Sensoreinheit, die nicht zur ersten Gruppe gehört, und/oder
- Aussenden des Signals in der zweiten Messung von wenigstens einer Sensoreinheit, die nicht zur zweiten Gruppe gehört. Das bedeutet, dass ein Signal von einer derartigen Sensoreinheit ausgesandt wird, die in der jeweiligen Messung nicht am Erfassen von Daten beteiligt ist.

Grundsätzlich können die Sensoreinheiten verschiedene Arten von Aktoren und/oder Sensoren aufweisen. Gemäß der Erfindung sind die Sensoreinheiten jedoch als Ultraschallsensoreinheiten mit jeweils einem Ultraschallsender und jeweils einem Ultraschallempfänger ausgebildet. Vorzugsweise sind in diesem Zusammenhang folgende Schritte vorgesehen:
- Auswählen wenigstens einer Ultraschallsensoreinheit durch die Zentraleinheit zum Senden eines jeweiligen Ultraschallsignals für die erste Messung,
- Senden des jeweiligen Ultraschallsignals von der ausgewählten Ultraschallsensoreinheit bzw. von den ausgewählten Ultraschallsensoreinheiten für die erste Messung,
- Auswählen der ersten Gruppe von Ultraschallsensoreinheiten durch die Zentraleinheit für die erste Messung und Zuordnen der Anzahl von Zeitschlitzen an jeweils eine der Ultraschallsensoreinheiten aus der ersten Gruppe durch die Zentraleinheit in Abhängigkeit davon, welche der Ultraschallsensoreinheiten voraussichtlich Echosignale aufgrund des gesendeten Ultraschallsignals bzw. aufgrund der gesendeten Ultraschallsignale empfangen wird, und/oder
- Auswählen wenigstens einer Ultraschallsensoreinheit durch die Zentraleinheit zum Senden eines jeweiligen Ultraschallsignals für die zweite Messung,
- Senden des jeweiligen Ultraschallsignals von der ausgewählten Ultraschallsensoreinheit bzw. von den ausgewählten Ultraschallsensoreinheiten für die zweite Messung,
- Auswählen der zweiten Gruppe von Ultraschallsensoreinheiten durch die Zentraleinheit für die zweite Messung und Zuordnen der Anzahl von Zeitschlitzen an jeweils eine der Ultraschallsensoreinheiten aus der zweiten Gruppe durch die Zentraleinheit in Abhängigkeit davon, welche der Ultraschallsensoreinheiten voraussichtlich Echosignale aufgrund des gesendeten Ultraschallsignals bzw. aufgrund der gesendeten Ultraschallsignale empfangen wird.

Die Erfindung umfasst auch die Verwendung eines Verfahrens in einem Kraftfahrzeug, eine Sensoranordnung, die zum Betrieb mittels eines zuvor beschriebenen Verfahrens eingerichtet ist. Vorzugsweise ist auch vorgesehen, dass der Ultraschallsender und der Ultraschallempfänger als dasselbe Bauteil ausgestaltet sind, nämlich vorzugsweise eine Membran aufweisen, mit der gesendet und empfange wird.

Insgesamt gilt für die Erfindung, dass die Sensoreinheiten und die Zentraleinheit über die Busleitung vorzugsweise in Serie miteinander verbunden sind, also in der sogenannten "Daisy Chain"-Konfiguration.

Nachfolgend wird die Erfindung unter Bezugnahme auf die Zeichnungen anhand bevorzugter Ausführungsbeispiele näher erläutert. Die dargestellten Merkmale können sowohl jeweils einzeln als auch in Kombination einen Aspekt der Erfindung darstellen.

Es zeigen
- Fig. 1: schematisch ein Kraftfahrzeug mit einer eine Zentraleinheit und mehrere Sensoreinheiten aufweisenden Sensoranordnung gemäß einem bevorzugten Ausführungsbeispiel der Erfindung,
- Fig. 2: schematisch die Kommunikation zwischen der Zentraleinheit und den Sensoreinheiten gemäß dem bevorzugten Ausführungsbeispiel der Erfindung in einer ersten Situation,
- Fig.3: schematisch eine noch nicht angepasste Kommunikation zwischen der Zentraleinheit und den Sensoreinheiten gemäß dem bevorzugten Ausführungsbeispiel der Erfindung in einer zweiten Situation,
- Fig.4: schematisch eine angepasste Kommunikation zwischen der Zentraleinheit und den Sensoreinheiten gemäß dem bevorzugten Ausführungsbeispiel der Erfindung in der zweiten Situation,
- Fig. 5: schematisch eine angepasste Kommunikation zwischen der Zentraleinheit und den Sensoreinheiten gemäß dem bevorzugten Ausführungsbeispiel der Erfindung in einer dritten Situation.

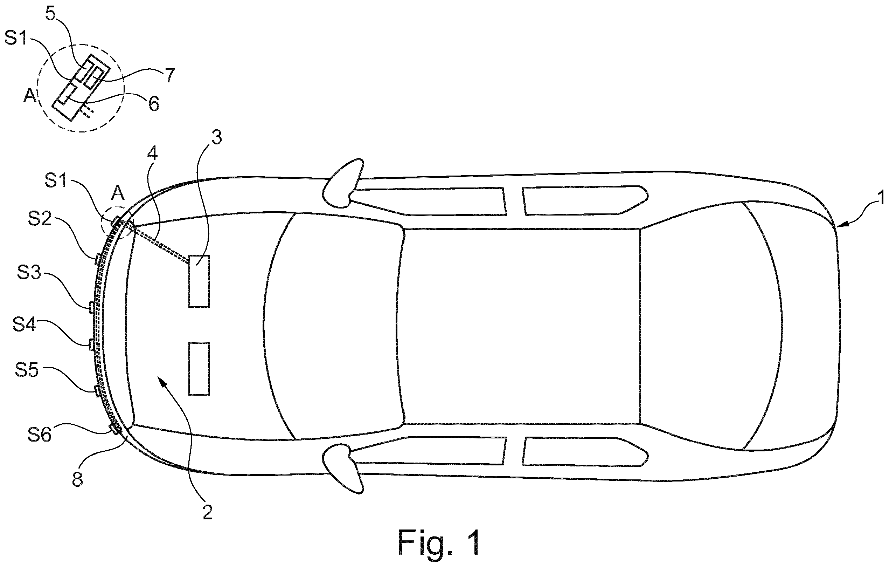

Fig. 1 zeigt in schematischer Ansicht ein mit einer eine Zentraleinheit 3 und sechs Sensoreinheiten S1, S2, S3, S4, S5, S6 aufweisende Sensoranordnung 2 gemäß einem bevorzugten Ausführungsbeispiel der Erfindung. Diese Sensoranordnung 2 ist Teil eines Fahrerassistenzsystems mit Sensoreinheiten S1, S2, S3, S4, S5, S6 an dem vorderen Stoßfänger 8 des Kraftfahrzeugs 1. Bei der Sensoranordnung 2 handelt es sich um eine Sensoranordnung 2 mit aktiven Sensoreinheiten S1, S2, S3, S4, S5, S6, also mit Sensoreinheiten S1, S2, S3, S4, S5, S6, die jeweils einen Sender 5, vorliegend einen Ultraschallsender, und einen Empfänger 6, vorliegend einen Ultraschallempfänger, in sich vereinen, wie exemplarisch anhand des vergrößerten Sensors S1 in Fig. 1 erkennbar. Konkret weisen die Sensoreinheiten eine Membran auf, mit der gesendet und empfangen wird; der Ultraschallsender und der Ultraschallempfänger sind also dasselbe Bauteil. Die Reflexion eines durch den Sender 5 abgestrahlten Ultraschallsignals kann daher durch den Empfänger 6 der gleichen Sensoreinheit S1 oder auch einer anderen Sensoreinheit S2, S3, S4, S5, S6 empfangen werden, um aus der Reflexion Rückschlüsse über die Umgebung des Fahrzeugs 1 zu ziehen.

Die Zentraleinheit 3 stellt im Sinne der DSI3-Spezifikation einen Master dar, der über eine Zweidraht-Busleitung 4 mit den sechs im Sinne der DSI3-Spezifikation als Slaves fungierenden Sensoreinheiten S1, S2, S3, S4, S5, S6 verbunden ist, so dass insgesamt ein Bus im Sinne der DSI3-Spezifikation vorliegt. Der Bus wird auf nachfolgend beschriebene Art betrieben, so dass trotz der nur zwei Leitungen sowohl die Energieversorgung der Sensoreinheiten S1, S2, S3, S4, S5, S6 im Sinne der DSI3-Spezifikation als auch eine schnelle und flexible Datenübertragung gewährleistet ist. Die hierfür erforderliche Kommunikation umfasst je Messzyklus drei unterschiedliche Phasen, die im Weiteren beschrieben sind.

Innerhalb eines jeden Messzyklus ist die erste Phase die so genannte CRM-Phase (Command and Response). In dieser Phase kommuniziert die Zentraleinheit 3 bidirektional mit den Sensoreinheiten S1, S2, S3, S4, S5, S6 und sendet dabei insbesondere Befehle aus, durch die die Sensoreinheiten S1, S2, S3, S4, S5, S6 darüber in Kenntnis gesetzt werden, welche der Sensoreinheiten S1, S2, S3, S4, S5, S6 im betreffenden Messzyklus ein Ultraschallsignal auszusenden hat. Die Sensoreinheiten S1, S2, S3, S4, S5, S6 senden in dieser CRM-Phase soweit erforderlich Antworten.

In der sich daran anschließenden zweiten Phase findet über die Busleitung 4 die Energieversorgung der Sensoreinheiten S1, S2, S3, S4, S5, S6 statt, insbesondere jener Sensoreinheiten S1, S2, S3, S4, S5, S6, die in der ersten Phase den Befehl zum Aussenden eines Ultraschallsignals erhalten haben. Diese elektrische Energie wird innerhalb eines Energiespeichers 7 der Sensoreinheiten S1, S2, S3, S4, S5, S6 zwischengespeichert, nämlich in einem hierfür vorgesehenen Kondensator. Noch während die Energieübertragung über die Busleitung 4 erfolgt, senden die betroffenen Sensoreinheiten S1, S2, S3, S4, S5, S6 mittels ihres jeweiligen Senders 5 und gespeist vom Kondensator 7 oder gespeist unmittelbar über die Busleitung 4 ein Ultraschallsignal aus und empfangen je nach Fahrzeugumgebung dessen Echosignal, also die Reflexion des ausgesendeten Ultraschallsignals, und gegebenenfalls auch Echosignale von Sendern 5 der anderen Sensoreinheiten S1, S2, S3, S4, S5, S6.

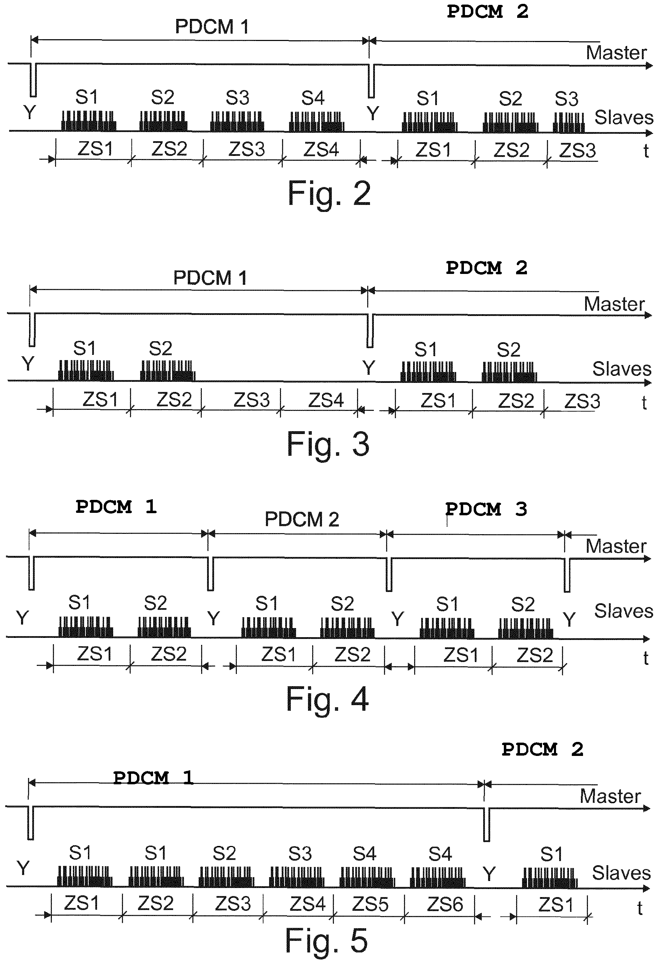

Es folgt als dritte und letzte Phase des Messzyklus die Übermittlung der Daten dieses Echosignals an die Zentraleinheit 3. Diese unidirektionale Übermittlung erfolgt im PDCM-Modus (Periodic Data Collection Mode). Derartige PDCM-Phasen sind schematisch in den Fig. 2 bis 5 dargestellt. In Abhängigkeit von der Zeit t sind dort schematisch die Signale dargestellt, die von der Zentraleinheit 3, also dem Master, bzw. von den Sensoreinheiten S1, S2, S3, S4, S5, S6, also den Slaves, ausgesandt werden.

Für diese PDCM-Phase ist charakteristisch, dass nicht, wie im CRM-Modus, die Zentraleinheit 3 über den Bus Befehle sendet, auf die die jeweils angesprochene Sensoreinheiten S1, S2, S3, S4, S5, S6 dann reagieren. Stattdessen sendet die Zentraleinheit 3 nur ein Synchronisationssignal Y. Dieses wird von allen Sensoreinheiten S1, S2, S3, S4, S5, S6 empfangen und als Referenzzeitpunkt genutzt.

Jede Sensoreinheit S1, S2, S3, S4, S5, S6 weist zur eindeutigen Adressierung im CRM-Modus eine Buskennung auf. Ausgehend von dem durch das Synchronisationssignal gesetzten Referenzzeitpunkt ermitteln die Sensoreinheiten S1, S2, S3, S4, S5, S6 dann die Zeitschlitze ZS1, ZS2, ZS3, ZS4, ZS5, ZS6, die ihrer jeweiligen Buskennung zugeordnet sind und in denen sie anschließend gemäß PDCM-Modus ihre Datenblöcke zur Übertragung an die Zentraleinheit 3 auf den Bus schreiben, so dass sie von der Zentraleinheit 3 zur Weiterverarbeitung gelesen werden können.

Die Zeitschlitze ZS1, ZS2, ZS3, ZS4, ZS5, ZS6, in denen die Sensoreinheiten S1, S2, S3, S4, S5, S6 jeweils exklusiv senden, sind ihnen zuvor in Form einer Art Zeitschlitztabelle im Rahmen einer CRM-Phase als Zeitintervalle relativ zum Synchronisationssignal Y, übermittelt worden. Jeder Buskennung kann eine bestimmte Anzahl dieser Zeitschlitze ZS1, ZS2, ZS3, ZS4, ZS5, ZS6 zugeordnet sein. Es kann jedoch auch Buskennungen ohne zugeordnetem Zeitschlitz geben.

Fig. 2 zeigt nun eine erste Situation entsprechend einer ersten Messung, für die von der Zentraleinheit eine erste Gruppe von Sensoreinheiten ausgewählt worden ist, die die Sensoreinheiten S1, S2, S3, S4 umfasst. Jede dieser Sensoreinheiten S1, S2, S3, S4 ist jeweils in einem Zyklus PDCM1, PDCM2 genau ein Zeitschlitz ZS1, ZS2, ZS3, ZS4 zugeordnet. Derartige Zyklen PDCM1, PDCM2 erfolgen nacheinander, bis alle Sensoreinheiten S1, S2, S3, S4 ihre Daten an die Zentraleinheit 3 übertragen haben. Den Sensoreinheiten S5 und S6 sind keine Zeitschlitze zugeordnet.

In einer zweiten Situation gemäß einer zweiten Messung ist es nun so, dass von den Sensoreinheiten S3 und S4 für das Fahrzeug 1 keine Echosignale zu erwarten sind. Würde die Vergabe der Zeitschlitze in dieser Situation nicht angepasst werden, so ergäbe sich ein Bild, wie in Fig. 3 dargestellt: Während die Sensoreinheiten S1, S2 in den Zeitschlitzen ZS1, ZS2 jeweils Daten übertragen, würden die Zeitschlitze ZS3, ZS4 leer bleiben, da die Sensoreinheiten S3, S4 keine Signale empfangen und damit auch keine Daten zu übertragen haben. Um einer derartigen Situation und einem damit verbundenen Verlust von Bandbreite auf dem Bus entgegenzuwirken, erfolgt für diese zweite Messung in der zweiten Situation eine Auswahl einer anderen, zweiten Gruppe von Sensoreinheiten, die nur die Sensoreinheiten S1, S2 umfasst. Diesen Sensoreinheiten S1, S2 wird jeweils genau ein Zeitschlitz in einem Zyklus PDCM1, PDCM2, PDCM3 zugeordnet, wie aus Fig. 4 ersichtlich. Damit wird deutlich, dass auf diese Weise wieder die volle Bandbreite des Busses zur Verfügung steht und nicht halbiert ist, wie es im Falle der in Fig. 3 gezeigten Situation der Fall gewesen wäre. Schließlich ist in Fig. 5 schematisch noch eine derartige Situation gezeigt, die einer dritten Messung entspricht und bei der von den Sensoreinheiten S5, S6 keine Signale und nur von den Sensoreinheiten S1, S2, S3, S4 Signale zu erwarten sind. Dabei ist es darüber hinaus in dieser Situation so, dass für die Sensoreinheiten S1, S4 es eine größere Menge an Daten zu übertragen gibt, als für die Sensoreinheiten S2, S3. Aus diesem Grund ist, wie in Fig. 5 dargestellt, den Sensoreinheiten S2, S3 jeweils nur ein einziger Zeitschlitz ZS3, ZS4 in einem Zyklus PDCM1, PDCM2 zugeordnet, während den Sensoreinheiten S1, S4 jeweils zwei Zeitschlitze ZS1, ZS2, ZS5, ZS6 zugeordnet sind. Den Sensoreinheiten S5, S6 sind keine Zeitschlitze zugeordnet, da von diesen keine Signale zu erwarten sind.

Auf diese Weise wird ein effektives Verfahren zum Betreiben der Sensoranordnung 2 in dem Kraftfahrzeug 1 auf Basis eines DSI-Protokolls anzugeben, bei dem eine Kommunikation zwischen dem Master und den Slaves durchgehend mit einer hohen Bandbreite möglich ist.

### Bezugszeichenliste

- 1: Kraftfahrzeug
- 2: Sensoranordnung
- 3: Zentraleinheit
- 4: Busleitung
- 5: Sender
- 6: Empfänger
- 7: Energiespeicher
- 8: Stoßfänger
- S1: Sensoreinheit
- S2: Sensoreinheit
- S3: Sensoreinheit
- S4: Sensoreinheit
- S5: Sensoreinheit
- S6: Sensoreinheit
- ZS1: Zeitschlitz
- ZS2: Zeitschlitz
- ZS3: Zeitschlitz
- ZS4: Zeitschlitz
- ZS5: Zeitschlitz
- ZS6: Zeitschlitz
- Y: Synchronisationssignal
- PDCM1: Zyklus
- PDCM2: Zyklus
- PDCM3: Zyklus

## Patentansprüche

1. Verfahren zum Betreiben einer Sensoranordnung in einem Kraftfahrzeug (1) auf Basis eines DSI-Protokolls, wobei
- die Sensoranordnung (2) eine Zentraleinheit (3) als Master und eine Mehrzahl jeweils einen Empfänger (6) aufweisende Sensoreinheiten (S1, S2, S3, S4, S5, S6) als von dem Master gesteuerte Slaves aufweist,
- die Zentraleinheit (3) und die Sensoreinheiten (S1, S2, S3, S4, S5, S6) an eine Busleitung (4) angeschlossen sind,
- über die Busleitung (4) eine Kommunikation zwischen der Zentraleinheit (3) und den Sensoreinheiten (S1, S2, S3, S4, S5, S6) und
- die Sensoreinheiten (S1, S2, S3, S4, S5, S6) als Ultraschallsensoreinheiten (S1, S2, S3, S4, S5, S6) mit jeweils einem Ultraschallsender und jeweils einem Ultraschallempfänger ausgebildet sind mit folgenden Schritten erfolgt:
- Auswählen einer ersten Gruppe von Ultraschallsensoreinheiten (S1, S2, S3, S4, S5, S6) durch die Zentraleinheit (3) für eine erste Messung, Zuordnen eines Zeitschlitzes (ZS1, ZS2, ZS3, ZS4, ZS5, ZS6) oder mehrerer Zeitschlitze (ZS1, ZS2, ZS3, ZS4, ZS5, ZS6) innerhalb eines ersten Zyklus (PDCM1) an jeweils eine der Ultraschallsensoreinheiten (S1, S2, S3, S4, S5, S6) aus der ersten Gruppe durch die Zentraleinheit (3) und Aussenden einer entsprechenden Zeitschlitzinformation von der Zentraleinheit (3) an die Ultraschallsensoreinheiten (S1, S2, S3, S4, S5, S6),
- Aussenden eines Synchronisierungssignals (Y) von der Zentraleinheit (3) an die Ultraschallsensoreinheiten (S1, S2, S3, S4, S5, S6),
- auf das Synchronisierungssignal (Y) hin Aussenden von von einer jeweiligen Ultraschallsensoreinheit (S1, S2, S3, S4, S5, S6) der ersten Gruppe jeweils erfassten Daten an die Zentraleinheit (3) in dem der jeweiligen Ultraschallsensoreinheit (S1, S2, S3, S4, S5, S6) zugeordneten Zeitschlitz (ZS1, ZS2, ZS3, ZS4, ZS5, ZS6) bzw. in den der jeweiligen Ultraschallsensoreinheit (S1, S2, S3, S4, S5, S6) zugeordneten Zeitschlitzen (ZS1, ZS2, ZS3, ZS4, ZS5, ZS6) des ersten Zyklus (PDCM1),
- Auswählen einer zweiten von der ersten Gruppe verschiedenen Gruppe von Ultraschallsensoreinheiten (S1, S2, S3, S4, S5, S6) durch die Zentraleinheit (3) für eine zweite Messung, Zuordnen eines Zeitschlitzes (ZS1, ZS2, ZS3, ZS4, ZS5, ZS6) oder mehrerer Zeitschlitze (ZS1, ZS2, ZS3, ZS4, ZS5, ZS6) innerhalb eines zweiten Zyklus (PDCM2, PDCM3) an jeweils eine der Ultraschallsensoreinheiten (S1, S2, S3, S4, S5, S6) aus der zweiten Gruppe durch die Zentraleinheit (3) und Aussenden einer entsprechenden Zeitschlitzinformation an die Ultraschallsensoreinheiten (S1, S2, S3, S4, S5, S6),
- Aussenden eines Synchronisierungssignals (Y) von der Zentraleinheit (3) an die Ultraschallsensoreinheiten (S1, S2, S3, S4, S5, S6),
- auf das Synchronisierungssignal (Y) hin Aussenden von von einer jeweiligen Ultraschallsensoreinheit (S1, S2, S3, S4, S5, S6) der zweiten Gruppe jeweils erfassten Daten an die Zentraleinheit (3) in dem der jeweiligen Ultraschallsensoreinheit (S1, S2, S3, S4, S5, S6) zugeordneten Zeitschlitz (ZS1, ZS2, ZS3, ZS4, ZS5, ZS6) bzw. in den der jeweiligen Ultraschallsensoreinheit (S1, S2, S3, S4, S5, S6) zugeordneten Zeitschlitzen (ZS1, ZS2, ZS3, ZS4, ZS5, ZS6) des zweiten Zyklus (PDCM2, PDCM3),
- Auswählen wenigstens einer Ultraschallsensoreinheit (S1, S2, S3, S4, S5, S6) durch die Zentraleinheit (3) zum Senden eines jeweiligen Ultraschallsignals für die erste Messung,
- Senden des jeweiligen Ultraschallsignals von der ausgewählten Ultraschallsensoreinheit bzw. von den ausgewählten Ultraschallsensoreinheiten für die erste Messung
- Auswählen der ersten Gruppe von Ultraschallsensoreinheiten durch die Zentraleinheit (3) für die erste Messung und Zuordnen der Anzahl von Zeitschlitzen (ZS1, ZS2, ZS3, ZS4, ZS5, ZS6) an jeweils eine der Ultraschallsensoreinheiten (S1, S2, S3, S4, S5, S6) aus der ersten Gruppe durch die Zentraleinheit (3) in Abhängigkeit davon, welche der Ultraschallsensoreinheiten (S1, S2, S3, S4, S5, S6) voraussichtlich Echosignale aufgrund des gesendeten Ultraschallsignals bzw. aufgrund der gesendeten Ultraschallsignale empfangen wird, und/oder
- Auswählen wenigstens einer Ultraschallsensoreinheit (S1, S2, S3, S4, S5, S6) durch die Zentraleinheit (3) zum Senden eines jeweiligen Ultraschallsignals für die zweite Messung,
- Senden des jeweiligen Ultraschallsignals von der ausgewählten Ultraschallsensoreinheit (S1, S2, S3, S4, S5, S6) bzw. von den ausgewählten Ultraschallsensoreinheiten (S1, S2, S3, S4, S5, S6) für die zweite Messung,
- Auswählen der zweiten Gruppe von Ultraschallsensoreinheiten (S1, S2, S3, S4, S5, S6) durch die Zentraleinheit (3) für die zweite Messung und Zuordnen der Anzahl von Zeitschlitzen (ZS1, ZS2, ZS3, ZS4, ZS5, ZS6) an jeweils eine der Ultraschallsensoreinheiten (S1, S2, S3, S4, S5, S6) aus der zweiten Gruppe durch die Zentraleinheit (3) in Abhängigkeit davon, welche der Ultraschallsensoreinheiten (S1, S2, S3, S4, S5, S6) voraussichtlich Echosignale aufgrund des gesendeten Ultraschallsignals bzw. aufgrund der gesendeten Ultraschallsignale empfangen wird.

2. Verfahren nach Anspruch 1, mit folgenden Schritten:
- Auswählen nur derartiger Ultraschallsensoreinheiten (S1, S2, S3, S4, S5, S6) für die erste Gruppe, von denen die Zentraleinheit (3) für die erste Messung Daten erwartet, und/oder
- Auswählen nur derartiger Ultraschallsensoreinheiten (S1, S2, S3, S4, S5, S6) für die zweite Gruppe, von denen die Zentraleinheit (3) für die zweite Messung Daten erwartet.

3. Verfahren nach einem der vorherigen Ansprüche, mit folgenden Schritten:
- wenigstens einmaliges Wiederholen des ersten Zyklus (PDCM1) und/oder
- wenigstens einmaliges Wiederholen des zweiten Zyklus (PDCM2, PDCM3).

4. Verfahren nach einem der vorherigen Ansprüche, mit folgenden Schritten:
- Zuordnen einer derartigen Anzahl von Zeitschlitzen (ZS1, ZS2, ZS3, ZS4, ZS5, ZS6) an eine jeweilige Ultraschallsensoreinheit (S1, S2, S3, S4, S5, S6) aus der ersten Gruppe, welche Anzahl von Zeitschlitzen (ZS1, ZS2, ZS3, ZS4, ZS5, ZS6) mit der von Zentraleinheit (3) für die erste Messung von der jeweiligen Ultraschallsensoreinheit (S1, S2, S3, S4, S5, S6) erwarteten Datenmenge korreliert, und
- Zuordnen einer derartigen Anzahl von Zeitschlitzen (ZS1, ZS2, ZS3, ZS4, ZS5, ZS6) an eine jeweilige Ultraschallsensoreinheit (S1, S2, S3, S4, S5, S6) aus der zweiten Gruppe, welche Anzahl von Zeitschlitzen (ZS1, ZS2, ZS3, ZS4, ZS5, ZS6) mit der von Zentraleinheit (3) für die zweiten Messung von der jeweiligen Ultraschallsensoreinheit (S1, S2, S3, S4, S5, S6) erwarteten Datenmenge korreliert.

5. Verfahren nach einem der vorherigen Ansprüche, wobei wenigstens eine Ultraschallsensoreinheit (S1, S2, S3, S4, S5, S6) jeweils einen Sender (5) zum Aussenden eines Ultraschallsignals aufweist, mit folgenden Schritten:
- Aussenden eines Ultraschallsignals in der ersten Messung von wenigstens einer einen Sender (5) aufweisenden Ultraschallsensoreinheit (S1, S2, S3, S4, S5, S6), und/oder
- Aussenden eines Ultraschallsignals in der zweiten Messung von wenigstens einer einen Sender (5) aufweisenden Ultraschallsensoreinheit (S1, S2, S3, S4, S5, S6).

6. Verfahren nach Anspruch 5, mit folgenden Schritten:
- Aussenden des Ultraschallsignals in der ersten Messung von wenigstens einer Ultraschallsensoreinheit (S1, S2, S3, S4, S5, S6), die nicht zur ersten Gruppe gehört, und/oder
- Aussenden des Ultraschallsignals in der zweiten Messung von wenigstens einer Ultraschallsensoreinheit (S1, S2, S3, S4, S5, S6), die nicht zur zweiten Gruppe gehört.

7. Verwendung eines Verfahrens nach einem der vorhergehenden Ansprüche in einem Kraftfahrzeug (1).

8. Nichtflüchtiges, computerlesbares Speichermedium mit darauf abgespeicherten Befehlen, die bei ihrer Ausführung auf einem Prozessor ein Verfahren nach einem der Ansprüche 1 bis 6 bewirken.

9. Sensoranordnung, die zum Betrieb mittels eines Verfahrens nach einem der Ansprüche 1 bis 6 eingerichtet ist.

10. Sensoranordnung nach Anspruch 9, die als Sensoreinheiten (S1, S2, S3, S4, S5, S6) Ultraschallsensoreinheiten zum Senden und/oder Empfangen von Ultraschallsignalen aufweist.

## Claims

1. Method for operating a sensor arrangement in a motor vehicle (1) on the basis of a DSI protocol, wherein
- the sensor arrangement (2) has a central unit (3) as master and a plurality of sensor units (S1, S2, S3, S4, S5, S6) each having a receiver (6) as slaves controlled by the master,
- the central unit (3) and the sensor units (S1, S2, S3, S4, S5, S6) are connected to a bus line (4),
- a communication between the central unit (3) and the sensor units (S1, S2, S3, S4, S5, S6) takes place via the bus line (4), and
- the sensor units (S1, S2, S3, S4, S5, S6) are embodied as ultrasonic sensor units (S1, S2, S3, S4, S5, S6) comprising in each case an ultrasonic transmitter and in each case an ultrasonic receiver,
comprising the following steps:
- selecting a first group of ultrasonic sensor units (S1, S2, S3, S4, S5, S6) by means of the central unit (3) for a first measurement, assigning one time slot (ZS1, ZS2, ZS3, ZS4, ZS5, ZS6) or a plurality of time slots (ZS1, ZS2, ZS3, ZS4, ZS5, ZS6) within a first cycle (PDCM1) respectively to one of the ultrasonic sensor units (S1, S2, S3, S4, S5, S6) from the first group by means of the central unit (3) and emitting corresponding time slot information from the central unit (3) to the ultrasonic sensor units (S1, S2, S3, S4, S5, S6),
- emitting a synchronization signal (Y) from the central unit (3) to the ultrasonic sensor units (S1, S2, S3, S4, S5, S6),
- in response to the synchronization signal (Y), emitting data acquired in each case by a respective ultrasonic sensor unit (S1, S2, S3, S4, S5, S6) of the first group to the central unit (3) in the time slot (ZS1, ZS2, ZS3, ZS4, ZS5, ZS6) assigned to the respective ultrasonic sensor unit (S1, S2, S3, S4, S5, S6) or in the time slots (ZS1, ZS2, ZS3, ZS4, ZS5, ZS6) assigned to the respective ultrasonic sensor unit (S1, S2, S3, S4, S5, S6) in the first cycle (PDCM1),
- selecting a second group of ultrasonic sensor units (S1, S2, S3, S4, S5, S6) different from the first group by means of the central unit (3) for a second measurement, assigning one time slot (ZS1, ZS2, ZS3, ZS4, ZS5, ZS6) or a plurality of time slots (ZS1, ZS2, ZS3, ZS4, ZS5, ZS6) within a second cycle (PDCM2, PDCM3) respectively to one of the ultrasonic sensor units (S1, S2, S3, S4, S5, S6) from the second group by means of the central unit (3) and emitting corresponding time slot information to the ultrasonic sensor units (S1, S2, S3, S4, S5, S6),
- emitting a synchronization signal (Y) from the central unit (3) to the ultrasonic sensor units (S1, S2, S3, S4, S5, S6),
- in response to the synchronization signal (Y), emitting data acquired in each case by a respective ultrasonic sensor unit (S1, S2, S3, S4, S5, S6) of the second group to the central unit (3) in the time slot (ZS1, ZS2, ZS3, ZS4, ZS5, ZS6) assigned to the respective ultrasonic sensor unit (S1, S2, S3, S4, S5, S6) or in the time slots (ZS1, ZS2, ZS3, ZS4, ZS5, ZS6) assigned to the respective ultrasonic sensor unit (S1, S2, S3, S4, S5, S6) in the second cycle (PDCM2, PDCM3),
- selecting at least one ultrasonic sensor unit (S1, S2, S3, S4, S5, S6) by means of the central unit (3) for transmitting a respective ultrasonic signal for the first measurement,
- transmitting the respective ultrasonic signal from the selected ultrasonic sensor unit or from the selected ultrasonic sensor units for the first measurement,
- selecting the first group of ultrasonic sensor units by means of the central unit (3) for the first measurement and assigning the number of time slots (ZS1, ZS2, ZS3, ZS4, ZS5, ZS6) respectively to one of the ultrasonic sensor units (S1, S2, S3, S4, S5, S6) from the first group by means of the central unit (3) depending on which of the ultrasonic sensor units (S1, S2, S3, S4, S5, S6) is expected to receive echo signals on account of the transmitted ultrasonic signal or on account of the transmitted ultrasonic signals, and/or
- selecting at least one ultrasonic sensor unit (S1, S2, S3, S4, S5, S6) by means of a central unit (3) for transmitting a respective ultrasonic signal for the second measurement,
- transmitting the respective ultrasonic signal from the selected ultrasonic sensor unit (S1, S2, S3, S4, S5, S6) or from the selected ultrasonic sensor units (S1, S2, S3, S4, S5, S6) for the second measurement,
- selecting the second groups of ultrasonic sensor units (S1, S2, S3, S4, S5, S6) by means of the central unit (3) for the second measurement and assigning the number of time slots (ZS1, ZS2, ZS3, ZS4, ZS5, ZS6) respectively to one of the ultrasonic sensor units (S1, S2, S3, S4, S5, S6) from the second group by means of the central unit (3) depending on which of the ultrasonic sensor units (S1, S2, S3, S4, S5, S6) is expected to receive echo signals on account of the transmitted ultrasonic signal or on account of the transmitted ultrasonic signals.

2. Method according to Claim 1, comprising the following steps:
- selecting for the first group only such ultrasonic sensor units (S1, S2, S3, S4, S5, S6) from which the central unit (3) expects data for the first measurement, and/or
- selecting for the second group only such ultrasonic sensor units (S1, S2, S3, S4, S5, S6) from which the central unit (3) expects data for the second measurement.

3. Method according to either of the preceding claims, comprising the following steps:
- repeating the first cycle (PDCM1) at least once and/or
- repeating the second cycle (PDCM2, PDCM3) at least once.

4. Method according to any of the preceding claims, comprising the following steps:
- assigning such a number of time slots (ZS1, ZS2, ZS3, ZS4, ZS5, ZS6) to a respective ultrasonic sensor unit (S1, S2, S3, S4, S5, S6) from the first group, which number of time slots (ZS1, ZS2, ZS3, ZS4, ZS5, ZS6) correlates with the volume of data expected by the central unit (3) from the respective ultrasonic sensor unit (S1, S2, S3, S4, S5, S6) for the first measurement, and
- assigning such a number of time slots (ZS1, ZS2, ZS3, ZS4, ZS5, ZS6) to a respective ultrasonic sensor unit (S1, S2, S3, S4, S5, S6) from the second group, which number of time slots (ZS1, ZS2, ZS3, ZS4, ZS5, ZS6) correlates with the volume of data expected by the central unit (3) from the respective ultrasonic sensor unit (S1, S2, S3, S4, S5, S6) for the second measurement.

5. Method according to any of the preceding claims, wherein at least one ultrasonic sensor unit (S1, S2, S3, S4, S5, S6) in each case has a transmitter (5) for emitting an ultrasonic signal, comprising the following steps:
- emitting an ultrasonic signal in the first measurement from at least one ultrasonic sensor unit (S1, S2, S3, S4, S5, S6) having a transmitter (5), and/or
- emitting an ultrasonic signal in the second measurement from at least one ultrasonic sensor unit (S1, S2, S3, S4, S5, S6) having a transmitter (5).

6. Method according to Claim 5, comprising the following steps:
- emitting the ultrasonic signal in the first measurement from at least one ultrasonic sensor unit (S1, S2, S3, S4, S5, S6) that does not belong to the first group, and/or
- emitting the ultrasonic signal in the second measurement from at least one ultrasonic sensor unit (S1, S2, S3, S4, S5, S6) that does not belong to the second group.

7. Use of a method according to any of the preceding claims in a motor vehicle (1).

8. Non-volatile, computer-readable storage medium having instructions stored thereon which, when they are executed on a processor, implement a method according to any of Claims 1 to 6.

9. Sensor arrangement configured for operation by means of a method according to any of Claims 1 to 6.

10. Sensor arrangement according to Claim 9, comprising ultrasonic sensor units for transmitting and/or receiving ultrasonic signals as sensor units (S1, S2, S3, S4, S5, S6) .

## Revendications

1. Procédé pour faire fonctionner un arrangement capteur dans un véhicule automobile (1) sur la base d'un protocole DSI,
- l'arrangement capteur (2) possédant une unité centrale (3) en tant que maître et une pluralité d'unités de capteur (S1, S2, S3, S4, S5, S6) possédant respectivement un récepteur (6) en tant qu'esclaves commandés par le maître,
- l'unité centrale (3) et les unités de capteur (S1, S2, S3, S4, S5, S6) étant connectées à une ligne de bus (4),
- une communication entre l'unité centrale (3) et les unités de capteur (S1, S2, S3, S4, S5, S6) ayant lieu par le biais de la ligne de bus (4) et
- les unités de capteur (S1, S2, S3, S4, S5, S6), sous la forme d'unités de capteur à ultrasons (S1, S2, S3, S4, S5, S6), étant configurées respectivement avec un émetteur d'ultrasons et respectivement avec un récepteur d'ultrasons, comprenant les étapes suivantes :
- sélection d'un premier groupe d'unités de capteur à ultrasons (S1, S2, S3, S4, S5, S6) par l'unité centrale (3) pour une première mesure, affectation d'un créneau temporel (ZS1, ZS2, ZS3, ZS4, ZS5, ZS6) ou de plusieurs créneaux temporels (ZS1, ZS2, ZS3, ZS4, ZS5, ZS6) au sein d'un premier cycle (PDCM1) respectivement à l'une des unités de capteur à ultrasons (S1, S2, S3, S4, S5, S6) du premier groupe par l'unité centrale (3) et émission d'une information de créneau temporelle correspondante de l'unité centrale (3) aux unités de capteur à ultrasons (S1, S2, S3, S4, S5, S6),
- émission d'un signal de synchronisation (Y) de l'unité centrale (3) aux unités de capteur à ultrasons (S1, S2, S3, S4, S5, S6),
- en réponse au signal de synchronisation (Y), émission de données respectivement acquises par une unité de capteur à ultrasons (S1, S2, S3, S4, S5, S6) respective du premier groupe à l'unité centrale (3) dans le créneau temporel (ZS1, ZS2, ZS3, ZS4, ZS5, ZS6) affecté à l'unité de capteur à ultrasons (S1, S2, S3, S4, S5, S6) respective ou dans les créneaux temporels (ZS1, ZS2, ZS3, ZS4, ZS5, ZS6) du premier cycle (PDCM1) affectés à l'unité de capteur à ultrasons (S1, S2, S3, S4, S5, S6) respective,
- sélection d'un deuxième groupe d'unités de capteur à ultrasons (S1, S2, S3, S4, S5, S6), différent du premier groupe, par l'unité centrale (3) pour une deuxième mesure, affectation d'un créneau temporel (ZS1, ZS2, ZS3, ZS4, ZS5, ZS6) ou de plusieurs créneaux temporels (ZS1, ZS2, ZS3, ZS4, ZS5, ZS6) au sein d'un deuxième cycle (PDCM2, PCDM3) respectivement à l'une des unités de capteur à ultrasons (S1, S2, S3, S4, S5, S6) du deuxième groupe par l'unité centrale (3) et émission d'une information de créneau temporelle correspondante aux unités de capteur à ultrasons (S1, S2, S3, S4, S5, S6),
- émission d'un signal de synchronisation (Y) de l'unité centrale (3) aux unités de capteur à ultrasons (S1, S2, S3, S4, S5, S6),
- en réponse au signal de synchronisation (Y), émission de données respectivement acquises par une unité de capteur à ultrasons (S1, S2, S3, S4, S5, S6) respective du deuxième groupe à l'unité centrale (3) dans le créneau temporel (ZS1, ZS2, ZS3, ZS4, ZS5, ZS6) affecté à l'unité de capteur à ultrasons (S1, S2, S3, S4, S5, S6) respective ou dans les créneaux temporels (ZS1, ZS2, ZS3, ZS4, ZS5, ZS6) du deuxième cycle (PDCM2, PDCM3) affectés à l'unité de capteur à ultrasons (S1, S2, S3, S4, S5, S6) respective ,
- sélection d'au moins une unité de capteur à ultrasons (S1, S2, S3, S4, S5, S6) par l'unité centrale (3) pour envoyer un signal ultrasonore respectif pour la première mesure,
- envoi du signal ultrasonore respectif de l'unité de capteur à ultrasons sélectionnée ou des unités de capteur à ultrasons sélectionnées pour la première mesure,
- sélection du premier groupe d'unités de capteur à ultrasons par l'unité centrale (3) pour la première mesure et affectation du nombre de créneaux temporels (ZS1, ZS2, ZS3, ZS4, ZS5, ZS6) respectivement à l'une des unités de capteur à ultrasons (S1, S2, S3, S4, S5, S6) du premier groupe par l'unité centrale (3) en fonction de celle des unités de capteur à ultrasons (S1, S2, S3, S4, S5, S6) qui recevra probablement des signaux d'écho en raison du signal ultrasonore envoyé ou en raison des signaux ultrasonores envoyés, et/ou
- sélection d'au moins une unité de capteur à ultrasons (S1, S2, S3, S4, S5, S6) par l'unité centrale (3) pour envoyer un signal ultrasonore respectif pour la deuxième mesure,
- envoi du signal ultrasonore respectif de l'unité de capteur à ultrasons (S1, S2, S3, S4, S5, S6) sélectionnée ou des unités de capteur à ultrasons (S1, S2, S3, S4, S5, S6) sélectionnées pour la deuxième mesure,
- sélection du deuxième groupe d'unités de capteur à ultrasons (S1, S2, S3, S4, S5, S6) par l'unité centrale (3) pour la deuxième mesure et affectation du nombre de créneaux temporels (ZS1, ZS2, ZS3, ZS4, ZS5, ZS6) respectivement à l'une des unités de capteur à ultrasons (S1, S2, S3, S4, S5, S6) du deuxième groupe par l'unité centrale (3) en fonction de celle des unités de capteur à ultrasons (S1, S2, S3, S4, S5, S6) qui recevra probablement des signaux d'écho en raison du signal ultrasonore envoyé ou en raison des signaux ultrasonores envoyés.

2. Procédé selon la revendication 1, comprenant les étapes suivantes :
- sélection, pour le premier groupe, seulement des unités de capteur à ultrasons (S1, S2, S3, S4, S5, S6) de la part desquelles l'unité centrale (3) attend des données pour la première mesure, et/ou
- sélection, pour le deuxième groupe, seulement des unités de capteur à ultrasons (S1, S2, S3, S4, S5, S6) de la part desquelles l'unité centrale (3) attend des données pour la deuxième mesure.

3. Procédé selon l'une des revendications précédentes, comprenant les étapes suivantes :
- répétition au moins une fois du premier cycle (PDCM1) et/ou
- répétition au moins une fois du deuxième cycle (PDCM2, PDCM3).

4. Procédé selon l'une des revendications précédentes, comprenant les étapes suivantes :
- affectation d'un nombre donné de créneaux temporels (ZS1, ZS2, ZS3, ZS4, ZS5, ZS6) à une unité de capteur à ultrasons (S1, S2, S3, S4, S5, S6) respective du premier groupe, ledit nombre de créneaux temporels (ZS1, ZS2, ZS3, ZS4, ZS5, ZS6) étant corrélé avec la quantité de données attendues par l'unité centrale (3) en provenance de l'unité de capteur à ultrasons (S1, S2, S3, S4, S5, S6) respective pour la première mesure, et
- affectation d'un nombre donné de créneaux temporels (ZS1, ZS2, ZS3, ZS4, ZS5, ZS6) à une unité de capteur à ultrasons (S1, S2, S3, S4, S5, S6) respective du deuxième groupe, ledit nombre de créneaux temporels (ZS1, ZS2, ZS3, ZS4, ZS5, ZS6) étant corrélé avec la quantité de données attendues par l'unité centrale (3) en provenance de l'unité de capteur à ultrasons (S1, S2, S3, S4, S5, S6) respective pour la deuxième mesure.

5. Procédé selon l'une des revendications précédentes, au moins l'une des unités de capteur à ultrasons (S1, S2, S3, S4, S5, S6) possédant respectivement un émetteur (5) destiné à émettre un signal ultrasonore, comprenant les étapes suivantes :
- émission d'un signal ultrasonore dans la première mesure par au moins une unité de capteur à ultrasons (S1, S2, S3, S4, S5, S6) possédant un émetteur (5), et/ou
- émission d'un signal ultrasonore dans la deuxième mesure par au moins une unité de capteur à ultrasons (S1, S2, S3, S4, S5, S6) possédant un émetteur.

6. Procédé selon la revendication 5, comprenant les étapes suivantes :
- émission du signal ultrasonore dans la première mesure par au moins une unité de capteur à ultrasons (S1, S2, S3, S4, S5, S6) qui n'appartient pas au premier groupe, et/ou
- émission du signal ultrasonore dans la deuxième mesure par au moins une unité de capteur à ultrasons (S1, S2, S3, S4, S5, S6) qui n'appartient pas au deuxième groupe.

7. Utilisation d'un procédé selon l'une des revendications précédentes dans un véhicule automobile (1) .

8. Support d'enregistrement non volatile, lisible par ordinateur, sur lequel sont enregistrées des instructions qui, lors de leur exécution sur un processeur, produisent un procédé selon l'une des revendications 1 à 6.

9. Arrangement capteur qui est conçu pour fonctionner au moyen d'un procédé selon l'une des revendications 1 à 6.

10. Arrangement capteur selon la revendication 9, qui possède en tant qu'unités de capteur (S1, S2, S3, S4, S5, S6) des unités de capteur à ultrasons destinées à émettre et/ou à recevoir des signaux ultrasonores.
